# EUROPEAN PATENT APPLICATION

(11) **EP 2 752 234 A1**
(43) Date of publication of application: **09.07.2014**
(21) Application number: 12827748.0
(22) Date of filing: 31.08.2012
(51) Int. Cl.: B01D 65/10, B01D 63/02

(54) **HOLLOW FIBER MEMBRANE MODULE INSPECTION METHOD**

(30) Priority: 31.08.2011 JP 2011188679
(71) Applicant: Mitsubishi Rayon Co., Ltd., Tokyo 100-8253 (JP)
(72) Inventor: SHIBATA Noritaka, Toyohashi-shi Aichi 440-8601 (JP); HINENOYA Takashi, Toyohashi-shi Aichi 440-8601 (JP)
(74) Representative: HOFFMANN EITLE
(86) International application number: PCT/JP2012/072213
(87) International publication number: WO 2013/031968

(57) **Abstract**

Provided is an inspection method of a hollow fiber membrane module and a repairing method capable of quickly identifying the position of a damaged membrane in the hollow fiber membrane module with a simple configuration. An inspection method of a hollow fiber membrane module (1) of the invention includes: a step of covering a potting end surface (8) at which an opening end of hollow fiber membranes (2) of a hollow fiber membrane bundle (4) is open with a light-transmissive cap (10) to form a sealed space; a step of reducing a pressure of the sealed space in a state where an inner portion of the hollow fiber membrane is filled with a liquid and an outer portion of the hollow fiber membrane comes into contact with air; a step of detecting bubbles released from the potting end surface; a step of illuminating the potting end surface with two line-shaped light beams (14, 16) which are longer than a diameter of the potting end surface through the light-transmissive cap so as to intersect at a position where the bubbles of the potting end surface are detected; a step of identifying a position of the damaged hollow fiber membrane on the potting end surface using an intersection (19) of the two line-shaped light beams; and a step of performing leakage prevention on the damaged hollow fiber membrane.

## Description

### TECHNICAL FIELD

The present invention schematically relates to an inspection method of a hollow fiber membrane module, and more particularly, relates to an inspection method of identifying the position of a damaged hollow fiber membrane (damaged membrane) in a hollow fiber membrane bundle included in the hollow fiber membrane module.

### BACKGROUND ART

Membrane separation in which a material is separated from a liquid by a separation membrane (filtration membrane) has features such as energy saving, space saving, labor saving, and product quality enhancement, and thus is used in various fields. Specifically, membrane separation in which microfiltration membranes or ultrafiltration membranes are used is used in a water purification process for producing industrial water or tap water from river water, groundwater, or treated sewage.

As separating means used for performing the membrane separation, there is a hollow fiber membrane module including a hollow fiber membrane bundle in which hollow fiber membranes having a number of pores formed on the side wall are bound together.

The hollow fiber membrane module can have a large membrane area per unit volume, and is thus used in various fluid treatment fields including concentration and desalination of enzymes, production of water for injection, recovery of electrodeposition paint, final filtration of ultrapure water, sewage and wastewater treatment, and clarification of river water, lake water, and underground water by ultrafiltration membranes, and chemical purification, sterilization, clarification by microfiltration membranes, and the like.

The hollow fiber membrane module is mainly classified into a pressurization type hollow fiber membrane module and an immersion type hollow fiber membrane module.

The pressurization type hollow fiber membrane module is a hollow fiber membrane module of a type in which pressurized raw water is introduced to the inside of each of hollow fiber membranes constituting a hollow fiber membrane bundle to cause the raw water to flow from the inside to the outside through the side walls of the hollow fiber membranes so as to be filtered, thereby obtaining permeated water (filtered water) on the outside of the hollow fiber membranes.

In addition, the immersion type hollow fiber membrane module is a hollow fiber membrane module of a type in which the opening end of hollow fiber membranes is suctioned in a state where a hollow fiber membrane bundle is immersed in a tank containing raw water to cause the raw water to flow from the outside to the inside through the side walls of the hollow fiber membranes so as to be filtered, thereby obtaining permeated water (filtered water) on the inside of the hollow fiber membranes.

In the pressurization type hollow fiber membrane module, the filtration pressure can be set to be greater than that of the immersion type hollow fiber membrane module, and thus the treatment amount per membrane area is large. Therefore, the number of membranes needed for the treatment can be reduced, and there is an advantage that the installation area can be reduced.

On the other hand, since the immersion type hollow fiber membrane module performs filtration by immersing the hollow fiber membrane bundle in the raw water, a property of discharging suspended substances clogging between the membranes is excellent, and thus raw water having a large amount of suspended substances can also be subjected to the membrane filtration. In addition, a filtration method is simple, and a small number of pipes are additionally needed. Therefore, there is an advantage that the facility cost can be reduced.

In the immersion type hollow fiber membrane module, the raw water is caused to flow from the outside to the inside of the hollow fiber membranes to filter out impurities in the raw water through the hollow fiber membranes having pores. Accordingly, the impurities adhere to the outer surface of the hollow fiber membranes, and thus the impurities need to be regularly removed from the outer surface of the hollow fiber membranes.

As the removal method, there are air washing in which air is blown to the lower portion of a hollow fiber membrane module to cause membranes to vibrate in water, thereby removing impurities that adhere to the outer surface of the hollow fiber membranes, backwashing in which high-pressure water (backwash water) is caused to flow in a direction reverse to a filtration direction of a hollow fiber membrane module, that is, from the inside to the outside of hollow fiber membranes, thereby removing impurities that adhere to the outer surface of the hollow fiber membranes from the inside of the hollow fiber membranes, and the like.

Here, typically, the hollow fiber membrane bundle of the hollow fiber membrane module is configured by binding thousands to tens of thousands of long and narrow hollow fiber membranes together, and each of the hollow fiber membranes in the hollow fiber membrane bundle functions as a filtration membrane. Therefore, when a damaged hollow fiber membrane (damaged membrane) is present in the hollow fiber membrane bundle, unfiltered raw water or water which is insufficiently filtered is incorporated into the filtered water, and filtered water having desired quality cannot be obtained.

Accordingly, detecting the presence or absence of the damaged membrane which is the damaged hollow fiber membrane and the position thereof is needed to obtain filtered water (permeated water) having desired quality.

Therefore, various methods of detecting the damaged membrane in the hollow fiber membrane module have been proposed. Specifically, a method of constantly monitoring the water quality of filtered water with a laser type turbidity meter during operations, a method of regularly supplying a pressurized gas having a pressure (for example, about 100 kPa) at which water can permeate through a normal membrane but gas cannot permeate from the filtration side of the hollow fiber membrane module, thereafter holding the resultant, and observing a degree of reduction in pressure (ASTM D6908-06 membrane module completeness test method), and the like have been proposed.

Furthermore, as the method of detecting the damaged membrane in the hollow fiber membrane module, the following method which uses a property in which gas easily infiltrates into a hollow portion of the damaged membrane from the outside is known.

For example, there is a method of taking a photograph of an end surface of a hollow fiber membrane bundle while pressurizing gas that comes into contact with the outside of the hollow fiber membrane bundle, detecting bubbles released from the opening end of a damaged membrane by processing the obtained image, and identifying a hollow fiber membrane which releases the bubbles as the damaged membrane (Patent Document 1).

Moreover, there is a method of scanning an end of a hollow fiber membrane module with a laser light while causing gas containing fine particles to flow into the module from the outside of the hollow fiber membrane and determining the hollow fiber membrane at a position where the laser light collides with the fine particles and scatters as a damaged membrane (Patent Document 2).

Furthermore, there is an inspection method of repeating a detection operation while changing or narrowing a range in which pressurized gas is supplied from an end surface of a hollow fiber membrane module, thereby identifying a damaged membrane which is damaged and causes leakage (Patent Document 3).

When the presence of the damaged membrane in the hollow fiber membrane module is detected, measures to identify, repair, and isolate the damaged membrane are employed.

In addition, as a method of repairing the damaged hollow fiber membrane, there are a method of blocking a damaged point (leaking point) of the hollow fiber membrane with an adhesive, a method of causing an adhesive to flow into the hollow portion of the damaged membrane so as not to obtain permeated water from the hollow fiber membrane, and the like.

### CITATION LIST

### PATENT DOCUMENT

Patent Document 1: JP 2007-17171 A
Patent Document 2: JP 3319825 B2
Patent Document 3: JP 2009-78243 A

### DISCLOSURE OF THE INVENTION

### PROBLEM TO BE SOLVED BY THE INVENTION

However, the method of Patent Document 1 has a problem in that the apparatus needs a sophisticated pressurization container for installing the hollow fiber membrane module inside.

In addition, the method of Patent Document 2 has a problem of, in addition to the necessity for a pressurization container, low accuracy in position identification due to the configuration in which the position of the damaged hollow fiber membrane is identified on the basis of the scattered light, which is replenished.

Furthermore, the method of Patent Document 3 has problems in that it is inconvenient to narrow the inspection area, it takes more time for detection as the center portion of the end surface is close, and although the area is narrowed, the range thereof is restricted by a detection tool and the position of the damaged hollow fiber membrane cannot be sufficiently narrowed.

The invention has been made to solve the above-described problems, and an object thereof is to provide an inspection method of a hollow fiber membrane module capable of quickly identifying the position of a damaged membrane in the hollow fiber membrane module with a simple configuration.

### MEANS FOR SOLING PROBLEM

According to the invention, there is provided an inspection method of a hollow fiber membrane module including: a step of covering a potting end surface at which an opening end of hollow fiber membranes of a hollow fiber membrane bundle constituting a hollow fiber membrane module is open with a light-transmissive cap to form a sealed space on the potting end surface; a step of reducing a pressure of the sealed space in a state where an inner portion of the hollow fiber membrane is filled with a liquid and an outer portion of the hollow fiber membrane comes into contact with air; a step of detecting bubbles released from the potting end surface; a step of illuminating the potting end surface with two line-shaped light beams which are longer than a diameter of the potting end surface through the light-transmissive cap so as to intersect at a position where the bubbles of the potting end surface are detected; a step of identifying a position of the damaged hollow fiber membrane on the potting end surface using an intersection of the two line-shaped light beams; and a step of performing leakage prevention on the damaged hollow fiber membrane.

According to this configuration, it is possible to identify the position of the damaged hollow fiber membrane with a simple operation of illuminating the potting end surface with the two line-shaped light beams.

According to another preferred aspect of the invention, the step of identifying the position of the damaged hollow fiber membrane includes: a step of, for each of the line-shaped light beam, putting a pair of marks on positions which oppose each other on the line-shaped light beam from an outside in a radial direction of the potting end surface with the potting end surface interposed therebetween while the line-shaped light beams are emitted; a step of removing the cap from the potting end surface; and a step of reproducing the intersection of the beams as the position of the damaged hollow fiber membrane by connecting the marks which form a pair for each of the line-shaped light beams.

According to another preferred aspect of the invention, the identifying step is a step of emitting the two line-shaped light beams again to match the pairs of marks and identifying the intersection thereof as the position of the damaged hollow fiber membrane.

According to another preferred aspect of the invention, the two line-shaped light beams illuminate the potting end surface while being perpendicular to each other.

According to another preferred aspect of the invention, a scale is provided on a transparent side portion of the transparent cap at a fixed interval.

According to another preferred aspect of the invention, the step of performing leakage prevention includes a step of applying a repairing agent to a hollow fiber membrane which is identified as the damaged hollow fiber membrane.

According to another preferred aspect of the invention, the step of performing leakage prevention is performed while the step of emitting the two line-shaped light beams and identifying the intersection thereof as the position of the damaged hollow fiber membrane is performed.

According to another preferred aspect of the invention, the line-shaped light beam is formed by a laser light beam having a wavelength of 500 nm or higher and 690 nm or less.

According to another preferred aspect of the invention, the repairing agent is made of an adhesive having a complex curing function of moisture curing and UV curing.

According to another preferred aspect of the invention, the hollow fiber membrane module is an immersion type hollow fiber membrane module.

According to another aspect of the invention, there is provided an inspection apparatus of a hollow fiber membrane which is an inspection apparatus of a hollow fiber membrane module, including: pressure reducing means for reducing a pressure of a potting end surface at which an opening end of hollow fiber membranes of a hollow fiber membrane bundle constituting a hollow fiber membrane module is open; and illuminating means for emitting two line-shaped light beams which intersect at the potting end surface are longer than a diameter of the potting end surface, wherein the illuminating means is able to individually change illumination positions of the two line-shaped light beams on the potting end surface.

### EFFECT OF THE INVENTION

According to the invention, an object thereof is to provide an inspection method of a hollow fiber membrane module and a repairing method capable of quickly identifying the position of a damaged membrane in the hollow fiber membrane module with a simple configuration.

### BRIEF DESCRIPTION OF DRAWINGS

Fig. 1 is a diagram schematically illustrating main parts of a hollow fiber membrane module in which a damaged membrane is identified according to an inspection method of a hollow fiber membrane module of a preferred embodiment of the invention.
Fig. 2 is a schematic perspective view illustrating a configuration for performing the inspection method of the hollow fiber membrane module of the preferred embodiment of the invention.
Fig. 3 is a schematic plan view for describing the inspection method of the hollow fiber membrane module of the preferred embodiment of the invention.
Fig. 4 is a schematic plan view for describing the inspection method of the hollow fiber membrane module of the preferred embodiment of the invention.
Fig. 5 is a diagram of an example of a transparent cap used in the inspection method of the hollow fiber membrane module of the preferred embodiment of the invention.

### BEST MODE(S) FOR CARRYING OUT THE INVENTION

An inspection method of a hollow fiber membrane module of a preferred embodiment of the invention will be described.

First, the hollow fiber membrane module in which a damaged membrane is identified and repaired by the inspection method of the hollow fiber membrane module of the preferred embodiment of the invention will be described.

### (Hollow Fiber Membrane and Hollow Fiber Membrane Module)

The hollow fiber membrane module in which the damaged membrane is identified and repaired by the inspection method of a hollow fiber membrane module 1 of this embodiment is an immersion type hollow fiber membrane module of a type in which the opening end of hollow fiber membranes is suctioned while being immersed in a tank accommodating raw water to obtain permeated water (filtered water) on the inside of the hollow fiber membranes.

In addition, an inspection object of the inspection method and an apparatus of the invention is not limited to the immersion type hollow fiber membrane module, and other types of hollow fiber membrane modules are also objects of the invention.

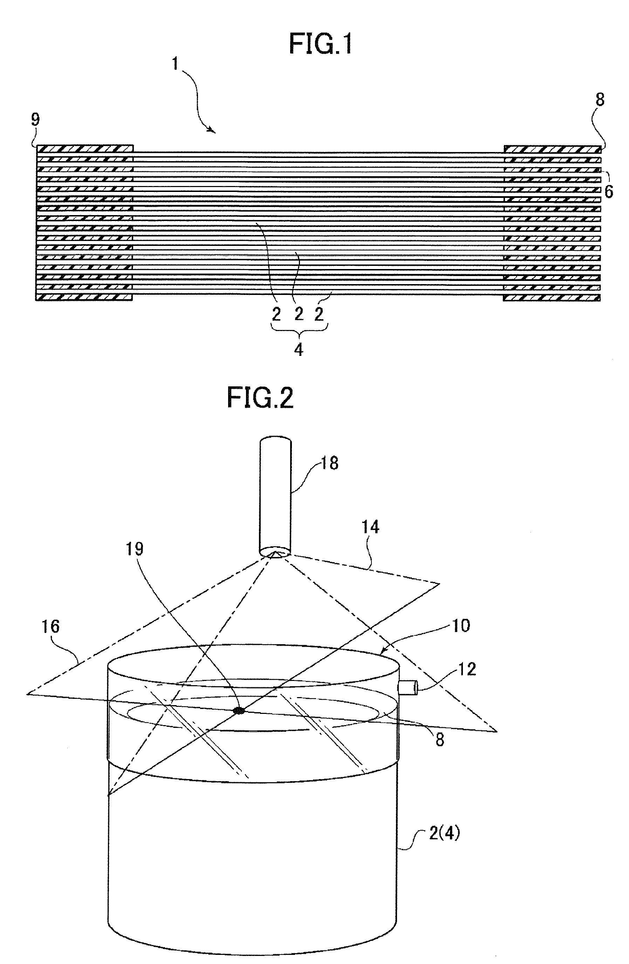

Fig. 1 is a diagram schematically illustrating main parts of the hollow fiber membrane module 1. The hollow fiber membrane module 1 is a module having a structure in which both ends of a columnar hollow fiber membrane bundle 4 obtained by binding hundreds to tens of thousands of thin cylindrical hollow fiber membranes 2 having a number of pores on the side wall thereof are fixed by an adhesive 6.

In the hollow fiber membrane module 1, the hollow fiber membranes 2 are adhered and fixed to each other by the adhesive 6 while an end thereof is open at one potting end surface 8 and an end thereof is closed at the other potting end surface 9.

In addition, the invention can also be applied to a hollow fiber membrane module having a structure in which the hollow fiber membranes 2 are adhered and fixed while both ends thereof are open.

The hollow fiber membrane module 1 performs a membrane filtration operation in a vertical arrangement, that is, in an arrangement in which the hollow fiber membranes 2 extend in the up and down direction.

However, the invention can also be applied to an immersion type hollow fiber membrane module which performs the membrane filtration operation in a horizontal arrangement, that is, in an arrangement in which the hollow fiber membranes 2 extend in the horizontal direction.

The hollow fiber membrane 2 is the same as a well-known hollow fiber membrane, and a material thereof is not particularly limited as long as the hollow fiber membrane is porous.

For example, a hollow fiber membrane made of a material including at least one type selected from the group consisting of polyacrylonitrile, polyphenylene sulfone, polyphenylene sulfide sulfone, polyvinylidene fluoride, polypropylene, polyethylene, polysulfone, polyvinyl alcohol, and an inorganic material such as cellulose acetate or ceramic is preferable. A polyvinylidene fluoride-based hollow fiber membrane is more preferably in terms of membrane strength.

The diameter of the pore provided in the side wall of the hollow fiber membrane 2 is, for example, in a range of 0.001 µm to 1 µm.

In addition, the outside diameter of the hollow fiber membrane 2 is not particularly limited, but is preferably in a range of 250 µm to 3000 µm because the hollow fiber membrane 2 has high oscillating properties and excellent washing properties.

The material and the like of the adhesive 6 which causes the hollow fiber membranes 2 to be adhered and fixed at both end portions of the hollow fiber membrane bundle 4 are not particularly limited, and a thermosetting resin such as an epoxy resin and a urethane resin is preferable.

### (Transparent Cap)

In the inspection method of this embodiment, a bottomed cylindrical transparent cap 10 is fitted to one end side of the hollow fiber membrane bundle to be detachable so that a sealed space is formed between the transparent cap 10 and the potting end surface 8 on one end side where the hollow fiber membranes 2 are adhered and fixed while the end thereof is open (Fig. 2). The transparent cap 10 is a bottomed cylindrical member, and has a configuration in which the internal space thereof communicates with external suctioning means via a suctioning port 12 for pressure reduction and suctioning. In addition, the side surface of the transparent cap 10 may be provided with an access port or the like to inject a repairing agent.

The entire transparent cap 10 is made of a transparent or translucent material so that bubbles released from the opening end of the damaged membrane are visible from the outside during an operation of identifying the damaged membrane. Although a transparent or translucent glass, a synthetic resin material, or the like is used, a thermoplastic resin material to which bubbles are less likely to adhere is preferably used.

Specifically, the transparent cap 10 is preferably made of polyvinyl chloride, a methyl methacrylate resin, a polystyrene-based resin, a fluorine-based resin, polycarbonate, polysulfone, polyethersulfone, an acrylonitrile-styrene copolymer, an acrylonitrile-butadiene copolymer, polychlorofluoroethylene, or the like.

In addition, the end portion of the hollow fiber membrane module 1 may be configured using a transparent member so as to have a function of the transparent cap for inspection.

### (Laser Projector)

In the inspection method of the hollow fiber membrane module in which the potting end surface 8 at which the end of the hollow fiber membranes 2 is open is covered with the transparent cap 10, the pressure of the inside of the transparent cap is reduced via the suctioning port 12 or the like, and bubbles generated from the potting end surface are detected to detect the damaged membrane of the hollow fiber membrane module 1, the potting end surface 8 is disposed inside the transparent cap 10 during the detection. Therefore, the position where the bubbles are generated, that is, the damaged membrane is present cannot be marked by putting a pin or the like.

Therefore, in this embodiment, as illustrated in Fig. 2, the position of the damaged membrane is marked using two line-shaped laser beams (cross line) 14 and 16 which are longer than the diameter of the potting end surface 8 and are perpendicular to each other.

In this embodiment, a laser projector 18 which illuminates the potting end surface 8 (end surface of the filtration side) of the hollow fiber membrane bundle 4 with the two perpendicular line-shaped laser beams (cross line) 14 and 16 is disposed above the potting end surface 8. The illumination position of each of the two line-shaped laser beams 14 and 16 is movable on the potting end surface 8.

As the laser projector 18 used as a light source, a laser projector that can generate the line-shaped laser beams 14 and 16 having high visibility is preferable, and thus those that generate laser beams having wavelengths in a visible light region are selected.

In a case where a UV curable resin is used as a repairing material, a wavelength in a region of higher than 450 nm which is a region where the UV curable resin is cured is preferably used as the wavelength of the laser light generated by the laser projector 18.

In an infrared light region of higher than 700 nm, the laser light is not visible, which is not preferable. Therefore, a laser projector 18 which generates line-shaped laser beams having wavelengths of 500 nm or higher and lower than 690 nm is preferable. Specifically, a laser projector 18 which generates a red laser light having a wavelength of 635 nm or a green laser light having a wavelength of 532 nm is used.

### (Identification Method of Damaged Membrane)

Next, an identification method of the damaged membrane which is the inspection method of a hollow fiber membrane module of the preferred embodiment of the invention will be described.

First, the hollow fiber membrane module 1 is fixed using a fixing tool and the like in a vertical arrangement in which the potting end surface 8 at which the end of the hollow fiber membranes 2 is open is positioned on the upper side. In addition, the fixing method is not particularly limited.

Next, the potting end surface 8 of the hollow fiber membrane bundle 4 is covered with the transparent cap 10. The transparent cap 10 is fitted to the tip end portion of the hollow fiber membrane bundle 4 while the bottom surface thereof is separated from the potting end surface 8 of the hollow fiber membrane bundle 4 so that the sealed space is formed between the transparent cap 10 and the potting end surface 8 of the hollow fiber membrane bundle 4. At this time, the inner circumferential surface of the opening end of the transparent cap 10 and the outer circumferential surface of the tip end portion of the hollow fiber membrane bundle 4 are airtightly connected such that the inside of the transparent cap 10 becomes the sealed space.

The internal space of each of the hollow fiber membranes 2 of the hollow fiber membrane module 1 is filled with a liquid such as water, and the outer circumference thereof is in a state of being surrounded by air, that is, the outer portion thereof is in a state of coming into contact with air.

When a hollow fiber membrane module in which a liquid such as water is not present inside the hollow fiber membrane is inspected, a hydrophilization treatment of wetting the inside of the hollow fiber membrane in ethanol or the like is performed so that moisture infiltrates into the hollow fiber membrane.

Furthermore, in order to facilitate visual recognition of the bubbles for the inspection, it is preferable that a small amount of water be supplied into the transparent cap 10 to form a water layer having a thickness of about several millimeters on the potting end surface 8.

In addition, when the immersion type hollow fiber membrane module in which both the ends of the hollow fiber membranes are open is inspected, one potting end surface is covered with the transparent cap 10. In addition, the other potting end surface is covered with a member such as rubber or a film for temporarily sealing the opening portion to maintain airtightness so that gas which infiltrates into the internal space of the hollow fiber membrane does not leak from the other potting end surface.

Subsequently, the pressure of the space in the transparent cap 10 is reduced by pressure reducing means (not illustrated). In this state, since the inside of the hollow fiber membrane 2 is filled with a liquid such as water, when there is no broken point, the surrounding air does not infiltrate into the internal space from the pores of the circumferential wall by surface tension of the liquid.

However, when there are broken points in the hollow fiber membrane 2, the damaged (defective) points communicate with the outside air, and thus the air infiltrates into the internal space of the hollow fiber membrane from the damaged points by the pressure reduction.

Here, breakage is referred to as a state where the membranes are separated, or a state where pinholes by which the filtration ability cannot be maintained are generated by scratches or the like.

The air that infiltrates into the internal space of the hollow fiber membrane 2 becomes bubbles, and the bubbles rise in the liquid inside the hollow fiber membrane 2 and are released from the opening end of the hollow fiber membrane 2 which is open at the potting end surface 8 to the space covered by the transparent cap 10. Therefore, by visually recognizing the bubbles from the outside of the transparent cap 10, the position of the damaged hollow fiber membrane, that is, the damaged membrane can be detected.

Next, the two line-shaped laser beams 14 and 16 which are longer than the length of the potting end surface and are perpendicular to each other are emitted by the laser projector 18 which is disposed above the transparent cap 10 toward the potting end surface 8 through the transparent cap so that both end portions of the line-shaped laser beams 14 and 16 protrude outward from the potting end surface 8.

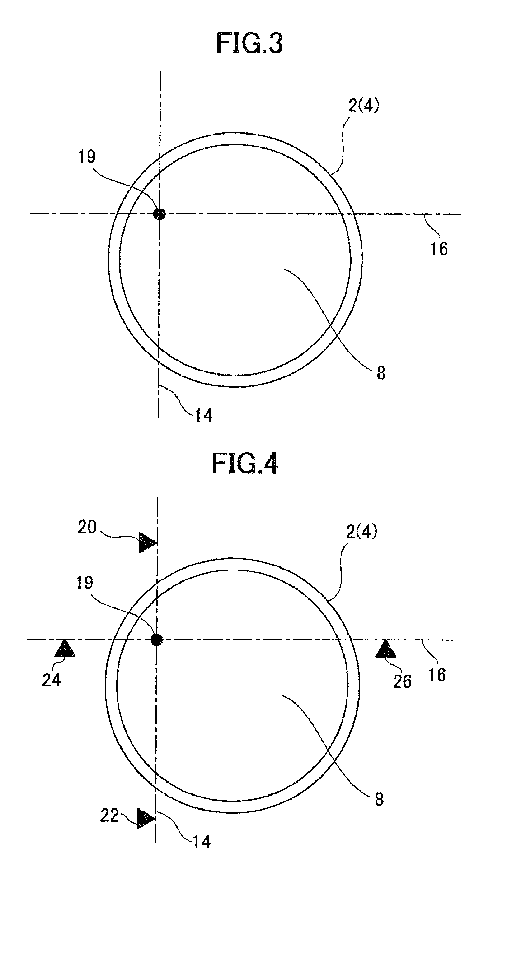

At this time, the illumination positions of the line-shaped laser beams 14 and 16 are adjusted so that an intersection 19 of the two line-shaped laser beams 14 and 16 is positioned at a part (leaking point) where the bubbles are generated on the potting end surface 8 (Fig. 3).

In the state where the intersection 19 of the two line-shaped laser beams 14 and 16 is disposed at the place where the bubbles are generated on the potting end surface 8, marks 20, 22, 24, and 26 are put on extending parts (protruding portions) of the two line-shaped laser beams 14 and 16 which extend outward from the potting end surface 8. That is, for the line-shaped laser beams 14 and 16, two pairs of marks 20, 22, 24, and 26 are put on a total of 4 points including one point per each of both sides of the potting end surface 8 (Fig. 4).

That is, for the line-shaped laser beam 14, the pair of marks 20 and 22 are put on the positions which oppose each other on the line-shaped beam from the outside in the radial direction of the potting end surface 8 with the potting end surface 8 interposed therebetween, and for the line-shaped laser beam 16 the pair of marks 24 and 26 are put on the positions which oppose each other on the line-shaped beam from the outside in the radial direction of the potting end surface 8 with the potting end surface 8 interposed therebetween.

Marked places are two points which oppose each other in the radial direction with the potting end surface 8 interposed therebetween for a single line-shaped laser beam, and since two line-shaped laser beams are emitted on a single damaged part, there are a total of 4 points.

Specifically, paper or the like is disposed at a position in the vicinity of the outside of the outer edge of the potting end surface 8 or a position on the outside of the potting end surface, and marking is performed on the paper.

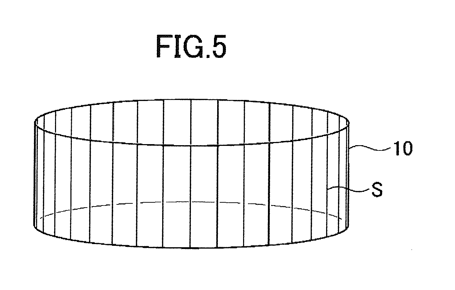

A ruler such as a scale may be provided on the inner circumference or the outer circumference of the transparent cap at constant intervals to assist the marking. Fig. 5 is an example of the transparent cap 10 provided with a scale S on the outer circumference.

Examples of the ruler provided on the inside of the transparent cap 10 includes protrusions formed at constant intervals or a transparent ruler, which is provided on the inner wall portion at a position through which a laser light is transmitted and becomes the reference of an extending line of the laser light during the transmission of the laser light. Particularly, when the illumination irradiation position of the laser projector is determined, the ruler can be used as the reference to perform fine corrections.

In addition, as the ruler provided on the outside of the transparent cap 10, there is paper which has lines of a lattice printed thereon and is disposed on the outside of the transparent cap, and the marking is performed on the intersection between the lattice printed on the paper and the laser.

Next, the pressure reduction of the space inside the transparent cap 10 and the illumination of the line-shaped laser beams 14 and 16 are stopped, and the transparent cap 10 is removed. In addition, the intersection is reproduced on the potting end surface 8 by connecting the pairs of marks (20 and 22) and (24 and 26) which are positioned with the potting end surface 8 interposed therebetween with lines, and the position is identified as the position of the damaged membrane.

As the method of connecting the pair of marks, there are a method of connecting the pairs of marks (20 and 22) and (24 and 26) with threads and a method of re-emitting line lasers that connect the pairs of marks (20 and 22) and (24 and 26) while the transparent cap is removed.

Furthermore, as necessary, a replenishing agent is applied to the damaged membrane to cure the damaged membrane and prevent the damaged membrane from leaking, thereby completing the inspection.

### (Repairing Agent)

For repair of the hollow fiber membrane module in this embodiment, the repairing agent is adhered to the end portion of the damaged hollow fiber membrane to block the opening of the hollow fiber membrane so that the raw water does not flow into the hollow fiber membrane.

As the repairing agent, a repairing agent having a moisture curing function is preferable. This is because the hollow fiber membrane module 1 in a wet state can be repaired without being dried, and since the repairing agent is cured by reacting with moisture contained in the hollow fiber membrane, the repairing agent exhibits the anchor effect and properly adheres to the hollow fiber membrane.

When drying is unnecessary before the repair, time to perform the drying can be reduced, and a problem of a change in an effective membrane area due to moisture heat shrinkage of the hollow fiber membrane by the drying can also be avoided.

In addition, when the hollow fiber membrane is dried once, there are problems in that when a re-inspection of leakage for checking whether or not the damaged hollow fiber membrane is reliably blocked after the repair of the damaged point is performed or when the hollow fiber membrane module 1 is returned to a water tank to be treated, the hollow fiber membrane needs to be subjected to hydrophilization again and thus time and effort is needed.

However, when the repairing agent having the moisture curing function which does not need drying before the repair is used, the re-hydrophilization operation becomes unnecessary, and thus time and effort can also be reduced. In addition, the moisture heat shrinkage and a change in the shape of the hollow fiber membrane by repeating the drying and the hydrophilization can also be avoided.

Furthermore, when drying is unnecessary before the repair, there is no need to move the hollow fiber membrane module to a facility having drying equipment, and the repair can be quickly performed in the use site, that is, a water purification plant or the like. Accordingly, time and effort needed for operations for the repair of the leaking point can be significantly reduced, and the operation efficiency in the site is significantly improved.

In addition, a repairing agent according to the related art which is made of a UV curable resin cured only by ultraviolet light or a hot melt resin can also be used.

In the repairing process, when a repairing agent having a light curing function in addition to the moisture curing function is used, the internal region of the repairing agent into which moisture is less likely to infiltrate only by the moisture curing function can be cured using the light curing function, which is preferable. As a result, the repairing agent at the repaired point has a high degree of crosslinking, and does not swell or deteriorate even when being immersed in water after the curing but has excellent strength and durability.

The repairing agent having the light curing function indicates a repairing agent in which curing is started by ultraviolet light illumination, the curing progresses until the repairing agent has practical strength, and the practical strength can be maintained even when the ultraviolet light illumination is stopped. The repairing agent preferably has a property of being cured in units of seconds after the ultraviolet light illumination.

As the repairing agent having the light curing function, a repairing agent which contains a photopolymerization initiator having a reaction wavelength of 100 to 400 nm and can avoid an effect of visible light (indoor scattered light) is preferable. In addition, an LED UV light which is generally and widely used as an ultraviolet light illumination device mostly has a light intensity of about 350 nm, and thus the repairing agent which contains a photopolymerization initiator having the maximum absorption near 350 nm can be preferably used from the viewpoint of efficiency, cost, and resource saving.

As the repairing agent, from the viewpoint of workability, a single liquid type repairing agent having excellent pot life is preferable. For example, an adhesive is appropriately selected from an acrylic adhesive, an epoxy-based adhesive, an oxetane-based adhesive, a cyanoacrylate-based adhesive, and the like, and by imparting a complex curing function to the adhesive, the repairing agent which is the object of the invention can be obtained.

When the repairing process is performed using the repairing agent having the light curing function along with the moisture curing function, the repairing agent is adhered to block the leaking point while the circumferential edge of the leaking point is at least in a wet state without drying the hollow fiber membrane module after the leakage inspection,. As the adhesion method, a method of dropping the repairing agent or a method of applying the repairing agent is employed. By adhering the repairing agent as such, the repairing agent quickly reacts with moisture in the hollow fiber membrane and is cured by the moisture. Thereafter, the adhered repairing agent is illuminated with ultraviolet light by the ultraviolet light illumination device.

Accordingly, the repairing agent reliably adheres to the circumferential edge of the leaking point by the anchor effect due to the reaction with the moisture in the hollow fiber membrane, and the internal region thereof is also sufficiently cured by the ultraviolet light illumination. Therefore, the repairing agent at the repaired point has strength and durability caused by the anchor effect or a high degree of crosslinking, and thus does not swell or deteriorate even when being immersed again in a water tank to be processed.

In addition, "the circumferential edge of the leaking point" is referred to as a part to which the repairing agent adheres to block the leaking point.

As the ultraviolet light illumination device, in addition to the LED ultraviolet lamp (UV-LED) described above, there are a metal-halide lamp, a high pressure mercury lamp, a ultrahigh pressure mercury lamp, a deep ultraviolet lamp, a lamp which excites a mercury lamp from the outside with no electrodes by using microwaves, a ultraviolet laser, a Xenon lamp, and the like. Among these, the LED ultraviolet lamp which uses a UV-LED as the light source easily switches between lighting on (illumination) and lighting off compared to the other ultraviolet lamps. Therefore, in the repairing operation in which lighting on (illumination) and lighting off are repeatedly performed, the LED ultraviolet lamp easily controls ultraviolet light illumination timings and is thus preferable.

The viscosity of the repairing agent before the curing affects repairing workability. A preferable viscosity of the repairing agent varies depending on the size of the leaking point and the like. The repairing agent having a viscosity of 1 mPa· s to a viscosity in a paste phase at room temperature (23°C) can be used, but a viscosity of 10 to 3000 mPa·s is preferable and a viscosity of 100 to 1000 mPa·s is more preferable. When the viscosity exceeds the upper limit of this range, it is difficult for the repairing agent to infiltrate in a membrane thickness direction even when the repairing agent is adhered to the circumferential edge of the leaking point 30 in a wet state. Therefore, it is difficult for the repairing agent to react with moisture inside the membrane, and the anchor effect has a tendency to be insufficient.

In contrast, when the viscosity is less than the lower limit of the range, the repairing agent so pervasively infiltrates into the vicinity of the leaking point that there are parts where light (ultraviolet light) emitted during the curing is less likely to reach and unreacted components remain, or holes that do not need the repair are blocked by the repairing agent, resulting in a possibility that the membrane area may be reduced.

As the repairing agent which has the light curing function along with the moisture curing function and has a viscosity in the above range, an ethyl cyanoacrylate-based light curable instant adhesive (Loctite#4305 manufactured by Henkel Ltd. and #1773E manufactured by ThreeBond Co., Ltd.) which contains a photoinitiator having the maximum absorption at 365 nm is preferable.

The invention is not limited to the above-described embodiment, and various changes or modifications thereof can be made within the scope of the claims.

In the embodiment, the marks are put on the extending lines (protruding portions) of the two line-shaped laser beams after identifying the leaking point, and the intersection of the line-shaped laser beams which is the leaking point is reproduced using the marks after removing the transparent cap. However, while the line-shaped laser beams are emitted after identifying the leaking point, the transparent cap may be removed and the repairing agent may be applied and cured to complete the repair.

In this case, when the UV curable resin is used as the repairing agent, the curing wavelength is different from the wavelength of the laser light for identifying the place. Therefore, the operation can be performed without the curing even during the application operation. The repairing agent is cured by performing UV illumination again.

In addition, when the liquid inside the hollow fiber membrane module 1 disappears from the damaged point of the hollow fiber membrane and the liquid level of the liquid in the hollow fiber membrane module 1 is lower than the potting end surface, it is difficult to detect the bubbles on the potting end surface. Therefore, a configuration in which a line for supplying water is provided in the transparent cap and water is supplied to the potting end surface so as to always maintain the layer of water at a degree at which the bubbles on the surface of the potting end surface are easily detected may be employed.

It is preferable that the line-shaped laser beams be arranged to be perpendicular to each other. However, the leaking point can be identified as long as the marks are put on four or more positions even though the line-shaped laser beams are not perpendicular to each other.

In terms of the operation, it is most preferable that the two laser lights are perpendicular to each other as in the cross line lasers. However, when at least the two line laser lights intersect, even in a case where two line laser lights intersect at, for example, an acute angle of 60°C, two straight lines can be specified by putting the marks on a total of four points including two points for each of the line lasers, and thus only a single intersection is provided between the two straight lines. Accordingly, the damaged point can be identified.

The potting end surface 8 s preferably illuminated with the line-shaped laser beam vertically but may also be configured to be illuminated in an inclined direction. Examples

### Hereinafter, Examples of the invention will be described.

### (Example 1)

As the hollow fiber membrane module, an immersion type hollow fiber type precise filtration membrane module manufactured by Mitsubishi Rayon Co., Ltd. (STERAPORE LFB3423, a membrane area of 50 m², an MF module using a hollow fiber membrane made of hydrophilic PE, and a nominal pore size of 0.1 µm) was prepared. A single hollow fiber membrane of a hollow fiber membrane bundle of the hollow fiber membrane module was damaged, and the hollow fiber membrane module was referred to as a hollow fiber membrane module as an inspection object.

First, while the inside of each of the hollow fiber membranes is filled with water, a transparent cap was fitted to the end portion of the hollow fiber membrane bundle which was a water collecting portion of the hollow fiber membrane module. Subsequently, a small amount of water was supplied into the cap so that the potting end surface of the hollow fiber membrane bundle was covered with the water.

The hollow fiber membrane module was oriented in the up and down direction in the air, and the pressure of the inside of the transparent cap was reduced to about -20 kPa by a vacuum pump. As a result, bubbles were generated from the opening end of the damaged hollow fiber membrane.

From a red cross line laser projector type: Z5RX-635 (manufactured by Tsuruga Electric Corporation, a wavelength of 635 nm, and a laser output of 5 mW x 2) which is disposed at a position above the potting end surface of the hollow fiber membrane module by 1 m, two perpendicular cross line lasers were emitted toward the potting end surface through the transparent cap. At this time, the two cross line lasers were arranged so that the intersection thereof does not overlap the position where bubbles were generated on the potting end surface. In addition, the cross line lasers marked two points that intersect the outer circumference of the potting end surface, a total of 4 positions.

Next, reducing the pressure was stopped, the transparent cap was removed to expose the potting end portion of the hollow fiber membrane bundle of the hollow fiber membrane module, the intersection of the cross line lasers was reproduced from the four marked positions of the outer circumferential portion of the potting end surface, and the position of the opening end of the broken membrane was identified.

Several milliliters of a UV curable instant adhesive (Loctite#4305 manufactured by Henkel Ltd.) as the repairing agent were dropped onto the leaking point at the position of the identified broken membrane, and then illuminated with UV light by an LED type UV light (a wavelength of 375 nm) so as to be cured.

Thereafter, the transparent cap was fitted to the end portion of the hollow fiber membrane module, the pressure of the internal space thereof was reduced, and the leakage inspection was performed again.

As a result, the generation of bubbles was not checked, and it was confirmed that the damaged hollow fiber membrane was sealed by the UV curable resin.

### (Example 2)

The same stages as those of Example 1 were performed until a stage of identifying the position of the damaged membrane by emitting the cross line lasers.

In Example 2, while continuously illuminating the damaged part with the cross line lasers, the transparent cap was removed, and several millimeters of the UV curable instant adhesive (Loctite#4305 manufactured by Henkel Ltd.) were dropped onto the center of the emitted cross line lights, and the resultant was cured by UV light.

Thereafter, the transparent cap was fitted to the end portion of the hollow fiber membrane module again, and the re-inspection was performed. As a result, the generation of bubbles was not checked, and it is confirmed that the damaged hollow fiber membrane was sealed by the UV curable resin.

### (Comparative Example 1)

As in Example 1, detection of the leaking point under the reduced pressure was performed.

The damaged point was visually viewed from above the transparent cap having the access port on the side surface of the transparent cap for the repair and was marked on the transparent cap with a permanent marker. Furthermore, without removing the cap, the repairing agent was injected from the access port into a position corresponding to the marked position for the repair.

However, the marked position and the repairing agent injection position easily deviate from each other, and three injecting operations were needed to repair the damaged point.

### (Comparative Example 2)

As in Example 1, detection of the leaking point under the reduced pressure was performed. In order to identify the place, a photograph of the upper portion of the transparent cap was taken, and the leaking point was repaired based on the photograph. However, it was difficult to identify the point, and the repairing operation was performed only in an area unit of 1.5 cm x 1.5 cm.

## Claims

1. An inspection method of a hollow fiber membrane module comprising:
a step of covering a potting end surface at which an opening end of hollow fiber membranes of a hollow fiber membrane bundle constituting a hollow fiber membrane module is open with a light-transmissive cap to form a sealed space on the potting end surface;
a step of reducing a pressure of the sealed space in a state where an inner portion of the hollow fiber membrane is filled with a liquid and an outer portion of the hollow fiber membrane comes into contact with air;
a step of detecting bubbles released from the potting end surface;
a step of illuminating the potting end surface with two line-shaped light beams which are longer than a diameter of the potting end surface through the light-transmissive cap so as to intersect at a position where the bubbles of the potting end surface are detected;
a step of identifying a position of a damaged hollow fiber membrane on the potting end surface using an intersection of the two line-shaped light beams; and
a step of performing leakage prevention on the damaged hollow fiber membrane.

2. The inspection method of a hollow fiber membrane module according to claim 1,
wherein the step of identifying the position of the damaged hollow fiber membrane includes:
a step of, for each of the line-shaped light beam, putting a pair of marks on positions which oppose each other on the line-shaped light beam from an outside in a radial direction of the potting end surface with the potting end surface interposed therebetween while the line-shaped light beams are emitted;
a step of removing the cap from the potting end surface; and
a step of reproducing the intersection of the beams as the position of the damaged hollow fiber membrane by connecting the marks which form a pair for each of the line-shaped light beams.

3. The inspection method of a hollow fiber membrane module according to claim 1,
wherein the identifying step is a step of emitting the two line-shaped light beams again to match the pairs of marks and identifying the intersection thereof as the position of the damaged hollow fiber membrane.

4. The inspection method of a hollow fiber membrane module according to any one of claims 1 to 3,
wherein the two line-shaped light beams illuminate the potting end surface while being perpendicular to each other.

5. The inspection method of a hollow fiber membrane module according to any one of claims 1 to 4,
wherein a scale is provided on a transparent side portion of the transparent cap at a fixed interval.

6. The inspection method of a hollow fiber membrane module according to any one of claims 1 to 5,
wherein the step of performing leakage prevention includes a step of applying a repairing agent to a hollow fiber membrane which is identified as the damaged hollow fiber membrane.

7. The inspection method of a hollow fiber membrane module according to any one of claims 3 to 6,
wherein the step of performing leakage prevention is performed while the step of emitting the two line-shaped light beams and identifying the intersection thereof as the position of the damaged hollow fiber membrane is performed.

8. The inspection method of a hollow fiber membrane module according to any one of claims 1 to 7,
wherein the line-shaped light beam is formed by a laser light beam having a wavelength of 500 nm or higher and 690 nm or less.

9. The inspection method of a hollow fiber membrane module according to any one of claims 6 to 8,
wherein the repairing agent is made of an adhesive having a complex curing function of moisture curing and UV curing.

10. The inspection method of a hollow fiber membrane module according to any one of claims 1 to 9,
wherein the hollow fiber membrane module is an immersion type hollow fiber membrane module.

11. An inspection apparatus of a hollow fiber membrane which is an inspection apparatus of a hollow fiber membrane module, comprising:
pressure reducing means for reducing a pressure of a potting end surface at which an opening end of hollow fiber membranes of a hollow fiber membrane bundle constituting a hollow fiber membrane module is open; and
illuminating means for emitting two line-shaped light beams which intersect at the potting end surface are longer than a diameter of the potting end surface,
wherein the illuminating means is able to individually change illumination positions of the two line-shaped light beams on the potting end surface.
